# EUROPÄISCHE PATENTSCHRIFT

(11) **EP 3 373 418 B1**
(45) Veröffentlichungstag und Bekanntmachung des Hinweises auf die Patenterteilung: **03.04.2024**
(21) Anmeldenummer: 18152819.1
(22) Anmeldetag: 22.01.2018
(51) Int. Cl.: H02K 15/03

(54) **ELEKTROMECHANISCHES BAUTEIL**
ELECTROMECHANICAL COMPONENT
COMPOSANT ÉLECTROMÉCANIQUE

(30) Priorität: 10.03.2017 DE 102017105138
(43) Veröffentlichungstag der Anmeldung: 12.09.2018
(73) Patentinhaber: MS-Schramberg Holding GmbH & Co. KG, 78713 Schramberg (DE)
(72) Erfinder: Svec, Michael, 78713 Schramberg (DE); Broghammer, Reinhold, 78713 Schramberg (DE); Schwegler, Dietmar, 78713 Schramberg (DE)
(74) Vertreter: Fleck, Hermann-Josef

(56) Entgegenhaltungen:
- EP-A1- 1 995 848
- EP-A1- 1 995 854
- EP-A1- 3 118 870
- WO-A1-2006/001304
- JP-A- H10 304 610
- JP-B2- 5 755 338
- US-A1- 2002 117 923
- US-A1- 2007 138 892
- US-A1- 2015 001 970

## Beschreibung

Die Erfindung bezieht sich auf ein Verfahren zum Herstellen eines elektromechanischen Bauteils, insbesondere für eine elektrische Maschine, bei dem aus in einer axialen Richtung aufeinandergeschichteten Blechlamellen ein Blechpaket gebildet wird, welches eine Hohlraumanordnung mit in axialer Richtung unter gleichbleibendem Querschnitt verlaufenden Hohlräumen und in diese eingebrachten kunststoffgebundenen Permanentmagnetkörpern mit Bindemittel und magnetischen Teilchen aufweist, und bei dem pulverförmiges Material welches in vorbestimmter Weise ein Bindemittel und magnetische Teilchen aufweist, in eine Pressraumanordnung einer Matrize gefüllt und darin zwischen einem Oberstempel und einem Unterstempel gepresst wird und die gepressten Permanentmagnetkörper mittels des Unterstempels in die Hohlräume geschoben werden.

Ein elektromechanisches Bauteil dieser Art sowie ein Verfahren zu dessen Herstellung sind in der EP 3 118 870 A1 als bekannt ausgewiesen. Bei diesem bekannten elektromechanischen Bauteil ist in ein aus geschichteten Blechlamellen gebildetes Blechpaket eines Rotors eine Anordnung aus kunststoffgebundenen Permanentmagnetkörpern dadurch eingebracht, dass zunächst pulverförmiges Magnetmaterial mit Binder in betreffende Öffnungen des Blechpakets eingefüllt wird, das dann in dem Blechpaket zu kompakten Formkörpern gepresst wird, wobei der Rotorkörper einen Teil einer Form bildet, die weiterhin außen an dem Rotorkörper positionierte Formteile und eine Heizvorrichtung umfasst. Der erwärmte und gehärtete Binder bindet die magnetischen Partikel an der inneren Oberfläche der Aufnahmeöffnungen in dem Rotorkörper.

In der US 2002/117923 A1 ist ein Verfahren zum Herstellen eines elektromechanischen Bauteils mit geschichteten Blechlamellen gezeigt, bei dem vorgefertigte plättchenförmige gebundene Magnetkörper in Schlitze eines Rotorkörpers eingepresst werden. Der Querschnitt der Magnetkörper hat dabei eine größere Breite und/oder größere Länge als der Schlitzquerschnitt und zum Einführen der Magnetkörper in die zugeordneten Schlitze des Rotorkörpers ist ein Führungselement mit konischem Durchführweg angegeben.

In der EP 1 995 848 A1 ist ein Verfahren zum Herstellen eines Rotors für einen Motor gezeigt, bei dem ein weichmagnetisches Joch und ein Permanentmagnetkörper aus Bindemitteln und magnetischen Teilchen integral in einem Presswerkzeug mit Unterstempel und Oberstempel gepresst werden.

Die US 2015/001970 A1 und die WO 2013/065110 A1 zeigen aus Blechlamellen geschichtete Rotorkörper, in die Permanentmagnetkörper aus Ferritmaterial und aus Seltenerdmaterial eingebracht sind.

Weitere elektromechanische Bauteile, insbesondere Rotorkörper, mit eingebrachten Permanentmagnetkörpern zeigen die US 2007/138892 A1, die EP 1 995 854 A1 sowie die JP H10 304610 A.

Ein Verfahren zum Herstellen eines elektromechanischen Bauteils, nämlich eines Rotors, zeigt auch die WO 2006/001304 A1. Hierbei wird gepresstes Magnetmaterial zwischen einem Oberstempel und einem Unterstempel als gepresster Magnetkörper geformt und in eine zylindrische Hülse geschoben, in der er sich durch Ausdehnen in Folge eines "spring back"-Effekts festsetzt.

Ein weiteres elektromechanisches Bauteil, und zwar ein Rotor für eine elektrische Maschine wie Motor oder Generator, ist in der WO 2013/103118 A1 angegeben. Bei diesem bekannten elektromechanischen Bauteil sind in einem Blechpaket, das aus in axialer Richtung aufeinander geschichteten Blechlamellen gebildet ist, in axialer Richtung verlaufende Hohlräume angeordnet, in welche kunststoffgebundene Permanentmagnetkörper durch Spritzen eingebracht sind. In den Permanentmagnetkörpern sind dabei anisotrope magnetische Teilchen enthalten, welche während des Spritzvorgangs in der Kunststoffmatrix in an sich üblicher Weise mittels eines Magnetfelds ausgerichtet werden. Zur Formung des ausrichtenden Magnetfelds sind spezielle Maßnahmen unter Wirkung von niedrigmagnetischen Abschnitten in dem Blechpaket getroffen. Das Einbringen strukturierter Magnetkörper und ihre Ausbildung in Verbindung mit dem Rotor bzw. auch allgemeiner einem elektromechanischen Bauteil ist auch wegen des zunehmenden Bestrebens, eine hohe Leistungsfähigkeit bei kompaktem Aufbau zu erreichen, schwierig und mit entsprechend hohem Aufwand verbunden.

Bekannt sind insbesondere auch elektromechanische Bauteile mit Permanentmagnetkörpern, wie Rotoren oder Statoren, bei denen z. B. gesinderte Magnetkörper in vorbereitete Aufnahmen eingesetzt und bevorzugt durch Kleben befestigt sind. Bei diesem Aufbau sind jedoch der Gestaltung in Folge eingeschränkter Formungsmöglichkeiten Grenzen gesetzt.

Eine besondere Technik zum Einbringen eines Magnetkörpers in eine Kavität, wie beispielsweise einen zylindrischen oder mehreckigen Hohlraum, ist in letzter Zeit bei der Anmelderin zum praktischen Einsatz gelangt, wobei ein kunststoffgebundener Permanentmagnetkörper aus pulverförmigem Material mit Bindemittel und magnetischen Teilchen zwischen einem Oberstempel und einem Unterstempel in einem Pressraum einer Matrize formgerecht gepresst und anschließend mittels eines Pressstempels noch auf dem Formwerkzeug in den exakt über dem Pressraum positionierten Hohlraum eines mit dem Permanentmagnetkörper zu bestückenden Bauteils eingeschoben und allein durch das Entspannen des gepressten Permanentmagnetkörpers in dem Hohlraum ohne weitere Maßnahmen kraftschlüssig festgesetzt wird, wie in der WO 2013/110755 A1 näher ausgeführt ist. Eine ähnliche Vorgehensweise zeigt auch die DE 20 2016 105 237.

Der vorliegenden Erfindung liegt die Aufgabe zugrunde, ein Verfahren zur Herstellung eines elektromechanischen Bauteils der eingangs genannten Art bereit zu stellen, das an bestimmte Anforderungen hinsichtlich seiner magnetischen Wirkungsweise möglichst gut anpassbar ist.

Diese Aufgabe wird bei einem Verfahren mit den Merkmalen des Anspruchs 1 gelöst.

Bei dem Verfahren zur Herstellung eines elektromechanischen Bauteils ist vorgesehen, dass die Permanentmagnetkörper aus pulverförmigem Material mit dem Bindemittel und den magnetischen Teilchen gepresst und unter Gleitreibung durch Fügen in die zugeordneten Hohlräume eingebracht und darin durch Entspannen unter kraftschlüssiger Verbindung festgelegt werden.

Im Einzelnen ist bei dem Verfahren zum Herstellen des elektromechanischen Bauteils vorgesehen, dass
- das ein Bindemittel und magnetische Teilchen in vorbestimmter Weise aufweisende pulverförmige Material in eine Pressraumanordnung einer Matrize gefüllt und darin zwischen einem Unterstempel und einem Oberstempel unter abgestimmtem Druck gepresst wird, um gepresste Permanentmagnetkörper zu bilden,
- das Bauteil vor oder nach dem Pressen mit in ihm durch Stanzen eingebrachten, sich in Pressrichtung axial mit gleichbleibendem Querschnitt erstreckenden Hohlräumen einer Hohlraumanordnung, die in ihrer Querschnittskontur an zuzuordnende Pressräume der Pressraumanordnung angepasst sind, bezüglich einer axialen Projektion mit den zugeordneten Pressräumen in Deckung gebracht wird, so dass die Hohlräume in der Projektion die betreffenden Pressräume mit ihrer Innenfläche umfangsseitig fluchtend umgeben,
- anschließend die gepressten Permanentmagnetkörper mittels des Unterstempels in Stanzrichtung in die zugeordneten Hohlräume geschoben werden und
- die durch das Einschieben eingefügten, in der vorbestimmten Weise zusammengesetzten und unter dem abgestimmten Druck gepressten Permanentmagnetkörper sich durch ihr Entspannen selbsttätig in den betreffenden Hohlräumen kraftschlüssig festsetzen.

Mit diesen Maßnahmen werden vielfältige Formungsmöglichkeiten der Permanentmagnetkörper und damit exakte Abstimmungsmöglichkeiten auf jeweilige Anforderungen erreicht. Die Herstellung des mit den Permanentmagnetkörpern bestimmten elektromechanischen Bauteils erfordert relativ wenige Schritte und ergibt eine entsprechend effiziente Prozessführung.

In Untersuchungen und Erprobungen der Erfinder hat sich ergeben, dass sich die gepressten Formkörper in Form der Permanentmagnetkörper auch in relativ filigrane Hohlräume einschieben und darin dadurch stabil festlegen lassen, dass vorgesehen ist, dass die Hohlraumanordnung durch Stanzen in das Blechpaket eingearbeitet ist und dass die Permanentmagnetkörper in Stanzrichtung in die Hohlräume eingefügt werden. Entgegen der Stanzrichtung bilden die Stanzgrate krallenartige Haltestrukturen.

Eine für die Funktion vorteilhafte Ausgestaltung des Bauteils besteht darin, dass die Hohlraumanordnung Hohlräume mindestens zweier unterschiedlicher Querschnitts formen aufweist und dass in die Hohlräume Permanentmagnetkörper mit den Hohlräumen entsprechender unterschiedlicher Querschnittsform eingefügt sind.

Eine für die Funktion weitere vorteilhafte Ausgestaltung wird dadurch erhalten, dass in die Hohlräume Permanentmagnetkörper aus mindestens zwei unterschiedlichen Sorten von pulverförmigem Material eingefügt sind. Mit diesen Maßnahmen lassen sich die Permanentmagnetkörper zum einen hinsichtlich eines in Abstimmung auf die Hohlräume optimalen Fügeprozesses und zum anderen hinsichtlich einer optimalen Funktionsweise unter Ausbildung eines möglichst wirksamen Magnetfeldes gestalten. Parameter für die Ausbildung der Permanentmagnetkörper sind dabei zum Beispiel Art der magnetischen Teilchen (stoffliche Zusammensetzung, Größe, physikalische Eigenschaften wie isotrop oder anisotrop), Auswahl von Additiven, wie Gleitmittel, Verteilung des Bindemittels, wobei das Bindemittel bei derartigen kunststoffgebundenen Permanentmagnetkörpern in der Regel ein Epoxidharz ist.

Hierbei besteht eine vorteilhafte Ausgestaltung darin, dass in die Hohlräume einer ersten Form Permanentmagnetkörper aus einer ersten Sorte pulverförmigen Materials und in Hohlräume einer zweiten Form Permanentmagnetkörper aus einer zweiten Sorte pulverförmigen Materials eingefügt werden.

Eine für den Aufbau und die Funktion weitere vorteilhafte Maßnahme besteht darin, dass zumindest ein Teil der Permanentmagnetkörper aus einer Zusammensetzung mit Seltenerdmagnetpulver, insbesondere mit NdFeB-Magnetpulver, oder mit Hartferritmagnetpulver hergestellt wird.

Insbesondere im Zusammenhang mit Magnetpulver des NdFeB-Typs besteht eine weitere vorteilhafte Ausgestaltung darin, dass die eingefügten Permanentmagnetkörper auf mindestens einer Stirnseite gegen korrosionsverursachende Einflüsse versiegelt werden. Mit dieser Maßnahme werden beispielsweise auch korrosionsanfällige Stellen, wie etwa gebrochene plättchenförmige magnetische Teilchen, vor Korrosionseinflüssen geschützt.

Verschiedene Ausgestaltungsvarianten ergeben sich dadurch, dass die Permanentmagnetkörper aus isotropen oder anisotropen magnetischen Teilchen hergestellt sind.

Weitere Vorteile für die Durchführung des Verfahrens werden dadurch erhalten, dass alle Permanentmagnetkörper gleichzeitig gepresst und anschließend gleichzeitig in die Hohlräume eingeschoben werden oder dass die Permanentmagnetkörper in mehreren Gruppen nacheinander gepresst und die Gruppen der Permanentmagnetkörper nacheinander und innerhalb der Gruppen gleichzeitig in die zugeordneten Hohlräume eingeschoben werden.

Für eine erhöhte Beständigkeit ist vorteilhaft vorgesehen, dass die in die Hohlräume eingefügten Permanentmagnetkörper stirnseitig korrosionsbeständig beschichtet werden.

Die Erfindung wird nachfolgend anhand von Ausführungsbeispielen unter Bezugnahme auf die Zeichnungen näher erläutert. Es zeigen:
- Fig. 1: Blechpaket aus geschichteten Blechlamellen mit eingearbeiteten Hohlräumen für ein elektromechanisches Bauteil in Form eines Rotors in perspektivischer Ansicht,
- Fig. 2: ein Bauteil mit Blechpaket nach Fig. 1 in seitlicher Ansicht und
- Fig. 3: das Bauteil nach Fig. 1 in axialer Draufsicht mit in Hohlräume der Hohlraumanordnung eingefügten Permanentmagnetkörpern einer ersten und einer zweiten Form.

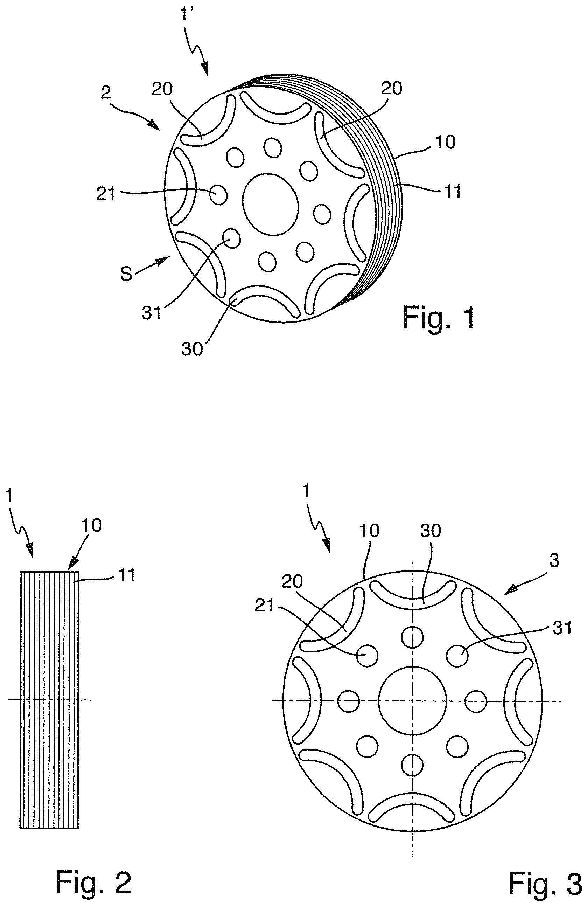

Fig. 1 zeigt ein Blechpaket 10 aus aufeinander geschichteten Blechlamellen 11 für ein elektromechanisches Bauteil 1, und zwar für einen Rotor einer elektrischen Maschine, wie Elektromotor oder Generator. In das Blechpaket 10 ist eine Hohlraumanordnung 2 mit Hohlräumen verschiedener Form eingearbeitet, beispielsweise Hohlräume 20 einer ersten Form und Hohlräume 21 einer zweiten Form in Gestalt beispielweise kreisförmig gebogener Ringabschnitte. Hohlräume 20, 21 und auch weitere Hohlräume verlaufen in axialer Richtung, die auch einer Stanzrichtung S entspricht, mit gleichbleibendem Querschnitt. Die in axialer Richtung aufeinander geschichteten Blechlamellen 11 sind in Fig. 2 deutlicher ersichtlich.

Bei dem in Fig. 3 dargestellten Bauteil 1 sind in die Hohlräume 20, 21 der Hohlraumanordnung 2 angepasste Permanentmagnetkörper 30, 31 einer ersten und einer zweiten Form eingefügt.

Die Permanentmagnetkörper 30, 31 sind als gepresste kunststoffgebundene Magnetkörper ausgebildet, wobei pulverförmiges Material mit einem Bindemittel (insbesondere Epoxidharz) und magnetischen Teilchen zwischen einem Unterstempel und einem Oberstempel in einer Matrize zu einem Formkörper gepresst wird. Die so ausgebildeten Permanentmagnetkörper 30, 31 werden anschließend direkt aus den Pressräumen der Matrize in die betreffenden Hohlräume 20, 21 des Blechpakets 10 eingeschoben und entspannen sich nach dem Einschieben in den betreffenden Hohlräumen 20, 21, wodurch sie sich kraftschlüssig (ohne weitere Maßnahmen wie Wärmezufuhr oder Kleben) stabil festsetzen. Diese Art des Fügeprozesses ist prinzipiell in der eingangs genannten WO 2013/110755 A1 der Anmelderin anhand eines einstückigen Formkörpers beispielsweise zylindrischer Gestalt näher beschrieben.

Vorliegend wird das mit der Hohlraumanordnung 2 versehene Blechpaket mit den zu bestückenden Hohlräumen 20, 21 auf der Oberseite der Matrize bzw. des Formwerkzeugs exakt positioniert, sodass in axialer Draufsicht die Konturen der Hohlräume 20, 21 genau mit den Konturen der in der Matrize bzw. der Pressform angeordneten Pressräume (in den Figuren nicht dargestellt) zur Deckung kommen. Nach dem Pressvorgang werden die gepressten Permanentmagnetkörper 30, 31 in die betreffenden Hohlräume 20, 21 durch Verfahren des Unterstempels eingeschoben, bis sie die vorgegebene axiale Lage in den Hohlräumen 20, 21 erreicht haben. Bei dem Einschiebevorgang kann der Oberstempel der Formvorrichtung, der dann von oben durch die durchgehenden Hohlräume 20, 21 des Blechpakets 10 geführt ist, auf der Oberseite der Permanentmagnetkörper 30 gehalten werden, wodurch die Permanentmagnetkörper 30, 31 bei dem Fügevorgang stabilisiert werden.

Vorteilhaft wird der Fügeprozess in Stanzrichtung S durchgeführt, wie sich in Untersuchungen der Erfinder herausgestellt hat. Hierdurch wird der Gleitvorgang beim Einschieben der Permanentmagnetkörper 30, 31 durch die Hohlraumkonturen in den Blechlamellen insbesondere in den Übergangsbereichen zwischen den einzelnen Blechlamellen kaum behindert und die vorgegebene Gestalt der Permanentmagnetkörper 30, 31 bleibt stabil erhalten. Zur Festlegung der Permanentmagnetkörper 30, 31 tragen andererseits gewisse durch die Übergänge zwischen den Blechlamellen 11 bedingte Rauigkeiten bei der Entspannung zusätzlich bei.

Die Permanentmagnetkörper 30, 31 können in die zugeordneten Hohlräume 20, 21 des Blechpakets 10 in Gruppen nacheinander oder alle gemeinsam eingefügt werden. Beispielsweise können die zu eine Gruppe zusammengefassten Permanentmagnetkörper 30 der ersten Form zuerst durch Befüllen der betreffenden zur ersten Form gehörenden Pressräume in der Matrize mittels entsprechender Füllschuhe vorbereitet und dann zwischen dem Unterstempel und dem Oberstempel gepresst werden, wonach sie in die betreffenden zugeordneten Hohlräume 20 der ersten Form in vorstehend beschriebener Weise eingefügt werden. Anschließend können die Permanentmagnetkörper der zweiten Form 31 nach Befüllen der betreffenden Pressräume in der Matrize über Füllschuhe mittels entsprechend angeordneter Unterstempel und Oberstempel gepresst und danach in der vorstehend beschriebenen Weise in die zugeordneten Hohlräume 21 der zweiten Form eingefügt werden. Zum exakten Positionieren des Blechpakets 10 mit seinen Hohlräumen 20, 21 über den Pressräumen des Formwerkzeugs sind in dem Bauteil 1 und an dem Formwerkzeug vorteilhaft komplementäre Positionierhilfen angeordnet. Das Einfügen der ersten Gruppe von Permanentmagnetkörpern 30 in die zugeordneten Hohlräume 20 und das Einfügen der zweiten Gruppe von Permanentmagnetkörpern 31 in die zugeordneten Hohlräume 21 und gegebenenfalls weiterer Gruppen von Permanentmagnetkörpern in zugeordnete weitere Hohlräume des Blechpakets 10 kann bei unveränderter Lage des Blechpakets 10 relativ zu dem Formwerkzeug erfolgen. Alternativ kann die Ausgestaltung der Formvorrichtung so ausgelegt sein, dass betreffende Pressräume an einer anderen Position des Formwerkzeugs bzw. der Pressform angeordnet sind und das Blechpaket 10 mit den betreffenden Hohlräumen relativ zu dem Formwerkzeug zum Bestücken mit der zweiten bzw. weiteren Gruppe von Permanentmagnetkörpern entsprechend versetzt und neu positioniert wird. Ein Bestücken eines Blechpakets 10 an geänderter Position gegenüber dem Formwerkzeug kann sich z. B. bei speziellen unterschiedlichen Formen von Hohlräumen anbieten, um beispielsweise die Ausgestaltung der Pressräume bzw. Unterstempel oder Oberstempel zu vereinfachen.

Auch können Permanentmagnetkörper 30, 31 unterschiedlicher Zusammensetzung, wie Material der magnetischen Teilchen bzw. des Magnetpulvers (Seltenerd-Material, wie SmCo-Material oder NdFeB-Material oder Hartferritmaterial, isotropes oder anisotropes Material), Bindemittel und/oder additive Bestandteile, wie etwa Gleitmittel, gewählt werden, wodurch zum einen der Fügeprozess und die kraftschlüssige Festlegung der Permanentmagnetkörper 30, 31 und zum anderen die magnetischen Eigenschaften des Bauteils 1, wie Rotor, beeinflusst und optimal abgestimmt werden können. So können beispielsweise unterschiedliche Füllgrade der Permanentmagnetkörper 30, 31 mit magnetischen Teilchen bzw. Magnetpulver gewählt werden. Auch können Permanentmagnetkörper 30, 31 mit mehreren Komponenten hergestellt und in die Hohlraumanordnung 2 des Blechpakets 10 eingefügt werden.

Eine vorteilhafte Maßnahme insbesondere im Zusammenhang mit korrosionsempfindlichem Seltenerd-Material besteht des Weiteren darin, dass die eingefügten Permanentmagnetkörper 30, 31 stirnseitig in den Hohlräumen 20, 21 versiegelt werden, um korrosive Einflüsse zu unterbinden.

## Patentansprüche

1. Verfahren zum Herstellen eines elektromechanischen Bauteils (1) mit geschichteten Blechlamellen, bei dem
- das ein Bindemittel und magnetische Teilchen in vorbestimmter Weise aufweisende pulverförmige Material in eine Pressraumanordnung einer Matrize gefüllt und darin zwischen einem Unterstempel und einem Oberstempel unter abgestimmtem Druck gepresst wird, um gepresste Permanentmagnetkörper (30, 31) zu bilden,
- das Bauteil (1) vor oder nach dem Pressen mit in ihm durch Stanzen eingebrachten, sich in Pressrichtung axial mit gleichbleibendem Querschnitt erstreckenden Hohlräumen (20,21) einer Hohlraumanordnung (2), die in ihrer Querschnittskontur an zuzuordnende Pressräume der Pressraumanordnung angepasst sind, bezüglich einer axialen Projektion mit den zugeordneten Pressräumen in Deckung gebracht wird, so dass die Hohlräume (20, 21) in der Projektion die betreffenden Pressräume mit ihrer Innenfläche umfangsseitig fluchtend umgeben,
- anschließend die gepressten Permanentmagnetkörper (30, 31) mittels des Unterstempels in Stanzrichtung in die zugeordneten Hohlräume (20, 21) geschoben werden und
- die durch das Einschieben eingefügten, in der vorbestimmten Weise zusammengesetzten und unter dem abgestimmten Druck gepressten Permanentmagnetkörper (30, 31) sich durch ihr Entspannen selbsttätig in den betreffenden Hohlräumen kraftschlüssig festsetzen.

2. Verfahren nach Anspruch 1,
**dadurch gekennzeichnet,**
**dass** die Hohlraumanordnung (2) Hohlräume (20, 21) mindestens zweier unterschiedlicher Querschnittsformen aufweist und
**dass** in die Hohlräume (20, 21) Permanentmagnetkörper (30, 31) mit den Hohlräumen (20, 21) entsprechender unterschiedlicher Querschnittsform eingefügt werden.

3. Verfahren nach Anspruch 1 oder 2,
**dadurch gekennzeichnet,**
**dass** in die Hohlräume (20, 21) Permanentmagnetkörper (30, 31) aus mindestens zwei unterschiedlichen Sorten von pulverförmigem Material eingefügt werden.

4. Verfahren nach Anspruch 3,
**dadurch gekennzeichnet,**
**dass** in die Hohlräume (20) einer ersten Form Permanentmagnetkörper (30) aus einer ersten Sorte pulverförmigen Materials und in Hohlräume (21) einer zweiten Form Magnetkörper (31) aus einer zweiten Sorte pulverförmigen Materials eingefügt werden.

5. Verfahren nach einem der vorhergehenden Ansprüche,
**dadurch gekennzeichnet,**
**dass** zumindest ein Teil der Permanentmagnetkörper (30, 31) aus einer Zusammensetzung mit Seltenerdmagnetpulver, insbesondere mit NdFeB-Magnetpulver, oder mit Hartferritmagnetpulver hergestellt wird.

6. Verfahren nach einem der vorhergehenden Ansprüche,
**dadurch gekennzeichnet,**
**dass** die Permanentmagnetkörper (30, 31) aus isotropen oder anisotropen magnetischen Teilchen hergestellt sind.

7. Verfahren nach einem der vorhergehenden Ansprüche,
**dadurch gekennzeichnet,**
**dass** alle Permanentmagnetkörper (30, 31) gleichzeitig gepresst und anschließend gleichzeitig in die Hohlräume (20, 21) eingeschoben werden oder
**dass** die Permanentmagnetkörper (30, 31) in mehreren Gruppen nacheinander gepresst und die Gruppen der Permanentmagnetkörper (30, 31) nacheinander und innerhalb der Gruppen gleichzeitig in die zugeordneten Hohlräume (20, 21) eingeschoben werden.

8. Verfahren nach einem der vorhergehenden Ansprüche,
**dadurch gekennzeichnet,**
**dass** die in die Hohlräume (20, 21) eingefügten Permanentmagnetkörper (30, 31) stirnseitig korrosionsbeständig beschichtet werden.

## Claims

1. Method for producing an electromechanical component (1) comprising layered metal laminations, in which
- the powdery material has a binder and magnetic particles in a predetermined manner is filled into a pressing chamber arrangement of a die and is pressed therein between a lower punch and an upper punch with a coordinated pressure in order to form pressed permanent magnet bodies (30, 31),
- before or after pressing, the component (1) with cavities (20, 21) of a cavity arrangement (2) whose cross-sectional contour is adapted to pressing chambers to be assigned of the pressing chamber arrangement, which cavities have been introduced into said component by punching and extend axially with a constant cross-section in the pressing direction, is brought into alignment with the assigned pressing chambers with respect to an axial projection so that the cavities (20, 21) in the projection surround the respective pressing chambers with their inner surface in circumferential alignment,
- the pressed permanent magnet bodies (30, 31) are subsequently pushed in the punching direction into the assigned cavities (20, 21) by means of the lower punch, and
- the permanent magnet bodies (30, 31) inserted by pushing, assembled in the predetermined manner and pressed with the coordinated pressure are automatically fixed by their expansion in the respective cavities in a force-fitting manner.

2. Method according to claim 1,
**characterized in that**
the cavity arrangement (2) has cavities (20, 21) of at least two different cross-sectional shapes, and
permanent magnet bodies (30, 31) with different cross-sectional shapes corresponding to the cavities (20, 21) are inserted into the cavities (20, 21).

3. Method according to claim 1 or 2,
**characterized in that**
permanent magnet bodies (30, 31) made of at least two different types of powdery material are inserted into the cavities (20, 21).

4. Method according to claim 3,
**characterized in that**
permanent magnet bodies (30) made of a first type of powdery material are inserted into the cavities (20) of a first shape, and magnet bodies (31) made of a second type of powdery material are inserted into the cavities (21) of a second shape.

5. Method according to any of the preceding claims,
**characterized in that**
at least a portion of the permanent magnet bodies (30, 31) is produced from a composition with rare earth magnetic powder, in particular with NdFeB magnetic powder, or with hard ferrite magnetic powder.

6. Method according to any of the preceding claims,
**characterized in that**
the permanent magnet bodies (30, 31) are produced from isotropic or anisotropic magnetic particles.

7. Method according to any of the preceding claims,
**characterized in that**
all permanent magnet bodies (30, 31) are simultaneously pressed and are subsequently pushed simultaneously into the cavities (20, 21), or
the permanent magnet bodies (30, 31) are pressed successively in multiple groups and the groups of the permanent magnet bodies (30, 31) are pushed successively, and simultaneously within the groups, into the assigned cavities (20, 21).

8. Method according to any of the preceding claims,
**characterized in that**
the permanent magnet bodies (30, 31) inserted into the cavities (20, 21) are corrosion-resistant-coated on the end face.

## Revendications

1. Procédé de fabrication d'un composant (1) électromécanique avec des tôles feuilletées stratifiées, dans lequel
- le matériau pulvérulent présentant un liant et des particules magnétiques d'une façon prédéterminée est introduit dans un agencement de chambre de pressage d'une matrice et y est pressé entre un poinçon inférieur et un poinçon supérieur sous une pression adaptée afin de former des corps à aimant permanent (30, 31) pressés,
- avant ou après le pressage avec des cavités (20, 21) d'un agencement à cavité (2), lesquelles cavités sont introduites dans le composant par poinçonnage et s'étendent axialement dans la direction de pressage avec une section transversale constante, et sont adaptées dans leur contour de section transversale à des chambres de pressage correspondantes de l'agencement de chambre de pressage, le composant (1) est amené à coïncider, par rapport à une projection axiale, avec les chambres de pressage correspondantes, en sorte que les cavités (20, 21) dans la projection entourent en alignement périphérique les chambres de pressage concernées avec leur surface interne,
- les corps à aimant permanent (30, 31) pressés sont ensuite introduits, suivant la direction de poinçonnage, dans les cavités (20, 21) correspondantes à l'aide du poinçon inférieur et
- les corps à aimant permanent (30, 31) introduits par insertion, assemblés de façon prédéterminée et pressés sous la pression adaptée se fixent automatiquement par adhérence dans les cavités concernées, en se détendant.

2. Procédé selon la revendication 1,
**caractérisé en ce**
**que** l'agencement à cavité (2) présente des cavités (20, 21) d'au moins deux sections transversales de formes différentes et
**que**, dans les cavités (20, 21), des corps à aimant permanent (30, 31) comportant les cavités (20, 21) de différentes formes de section transversales correspondantes sont insérés.

3. Procédé selon la revendication 1 ou 2,
**caractérisé en ce**
**que**, dans les cavités (20, 21), des corps à aimant permanent (30, 31) d'au moins deux types différents de matériau pulvérulent sont insérés.

4. Procédé selon la revendication 3,
**caractérisé en ce**
**que**, dans les cavités (20) d'une première forme, des corps à aimant permanent (30) d'un premier type de matériau pulvérulent sont insérés et, dans des cavités (21) d'une seconde forme, des corps à aimant (31) d'un second type de matériau pulvérulent sont insérés.

5. Procédé selon l'une des revendications précédentes,
**caractérisé en ce**
**qu'**au moins une partie des corps à aimant permanent (30, 31) est fabriquée à partir d'une composition à base de poudre magnétique de terres rares, en particulier à base de poudre magnétique NdFeB ou à base de poudre magnétique en ferrite dure.

6. Procédé selon l'une des revendications précédentes,
**caractérisé en ce**
**que** les corps à aimant permanent (30, 31) sont fabriqués à partir de particules magnétiques isotropes ou anisotropes.

7. Procédé selon l'une des revendications précédentes,
**caractérisé en ce**
**que** tous les corps à aimant permanent (30, 31) sont pressés concomitamment puis insérés concomitamment dans les cavités (20, 21) ou
**que** les corps à aimant permanent (30, 31) sont pressés en plusieurs groupes les uns après les autres et les groupes des corps à aimant permanent (30, 31) sont insérés les uns après les autres et concomitamment au sein des groupes dans les cavités (20, 21) correspondantes.

8. Procédé selon l'une des revendications précédentes,
**caractérisé en ce**
**que** les corps à aimant permanent (30, 31) introduits dans les cavités (20, 21) sont revêtus frontalement de couches résistant à la corrosion.
